# EUROPEAN PATENT SPECIFICATION

(11) **EP 2 637 232 B1**
(45) Date of publication and mention of the grant of the patent: **20.09.2017**
(21) Application number: 13150360.9
(22) Date of filing: 07.01.2013
(51) Int. Cl.: H01M 2/10, H01M 10/42

(54) **Secondary battery**
Sekundärbatterie
Batterie secondaire

(30) Priority: 05.03.2012 KR 20120022567
(43) Date of publication of application: 11.09.2013
(73) Proprietor: Samsung SDI Co., Ltd., Yongin-si, Gyeonggi-do (KR)
(72) Inventor: Byun, Bohyun, Gyeonggi-do (KR)
(74) Representative: Walaski, Jan Filip

(56) References cited:
- EP-A2- 2 200 107
- GB-A- 2 217 912
- US-A1- 2005 282 069
- US-A1- 2009 029 241

## Description

A lithium ion battery is a type of secondary battery. In a lithium ion battery, lithium ions move from a negative electrode to a positive electrode during a discharge operation while the lithium ions move from a positive electrode to a negative electrode during a charge operation. The lithium ion battery is widely used in portable electronic devices because it has a high energy density, lacks a memory effect, and is low in natural discharge rate during non-use. In addition, the lithium ion battery is increasingly used in various application fields, including electronic tools, electric bicycles, electric motorcycles, electric automobiles, airplanes, and so on, due to its high energy density.

The lithium ion battery is largely composed of a positive electrode, a negative electrode, and an electrolyte, which are made of a variety of materials. For example, graphite is most widely used as a negative electrode material on a commercial basis. A lamellar-type lithium cobalt oxide or a lithium manganese oxide is generally used as a positive electrode material. The voltage, cycle life, capacity, and stability of a battery may greatly change according to the materials used in the positive and negative electrodes and electrolyte.

The capacity of a battery may be indicated in milliampere-hours (mAh) or ampere-hours (Ah). A cellular phone battery capacity is usually in a range of approximately 800 to 1000 mAh, and a smartphone battery capacity is in a range of approximately 1100 to 1950 mAh. A notebook computer battery capacity is in a range of approximately 2400 to 5500 mAh.

US2005/282069 and EP2200107 relate to gluing a battery into a case. GB2217912 relates to construction of a calculator. Ups2009/029241 relates to attaching rubber feet to a laptop.

According to an aspect of the present invention, there is provided a secondary battery according to claim 1. The secondary battery is configured to prevent or substantially prevent leakage of an adhesive when a bottom case is attached to a battery cell using the adhesive.

According to an embodiment of the present invention, a secondary battery includes a battery cell, a protection circuit module electrically connected to the battery cell, a top case covering the protection circuit module and a bottom case covering a bottom surface of the battery cell and the bottom case includes one or more trenches formed in the inside surface of the bottom case that faces the bottom surface of the battery cell.

The one or more trenches may be formed in a direction away from a periphery of the bottom surface of the battery cell.

The secondary battery may further include an adhesive between the periphery of the bottom surface of the battery cell and the one or more trenches of the bottom case.

The secondary battery may further include an adhesive between the bottom surface of the battery cell and the bottom case.

The secondary battery may further include an adhesive between the bottom surface of the battery cell and the one or more trenches of the bottom case.

The bottom case may have a pair of linear long sides spaced apart from each other and a pair of curved short sides connecting opposite ends of the linear long sides, and the one or more trenches may be spaced apart from the pair of linear long sides, respectively.

The one or more trenches may be substantially parallel to the pair of linear long sides, respectively. The one or more trenches may be spaced apart from the pair of curved short sides, respectively. The one or more trenches may be substantially parallel to the pair of curved short sides, respectively.

The bottom case may have a pair of linear long sides spaced apart from each other and a pair of curved short sides connecting opposite ends of the linear long sides, and the one or more trenches may be formed along inner peripheries of the pair of linear long sides, respectively. The one or more trenches may be formed along inner peripheries of the pair of curved short sides, respectively.

In one embodiment, the one or more trenches may be formed in solid line types. In one embodiment, the one or more trenches may be formed in dash line types.

The one or more trenches may have a depth of 5% to 50% of a thickness of the bottom case.
The bottom case may further include a planar first surface closely contacting the bottom surface of the battery cell and a second surface opposite to the first surface, and each of the one or more trenches may have an inclined surface inclined from the first surface toward the second surface, and a curved surface curved from the inclined surface toward a periphery of the bottom case.

The battery cell may include a pair of long side regions, and the bottom case may further include close contact portions extending to the long side regions of the battery cell and closely contacting the long side regions.

The secondary battery may further include a label wrapping the battery cell, the top case, and the bottom case.

According to another embodiment of the present invention, a secondary battery includes: a battery cell; a case covering a surface of the battery cell; and an adhesive between the case and the surface of the battery cell, and the case includes one or more trenches formed in a direction away from the surface of the battery cell, the one or more trenches receiving the adhesive therein.

According to an aspect of embodiments of the present invention, since trenches having a depth (e.g., a predetermined depth) are formed in a bottom case adhered to a battery cell using an adhesive, leakage of the adhesive is prevented or substantially prevented during adhesion between the battery cell and the bottom case.

The above and other features and aspects of the present invention will become more apparent to those of ordinary skill in the art by describing in detail some exemplary embodiments with reference to the attached drawings, in which:
FIGS. 1A and 1B are a perspective view and an exploded perspective view, respectively, of a secondary battery according to an embodiment of the present invention;
FIGS. 2A and 2B are partial cross-sectional views of the secondary battery of FIG. 1, taken along the lines 2a-2a and 2b-2b, respectively;
FIG. 3 is an enlarged view of a region "3" shown in FIG. 2B;
FIGS. 4A and 4B are a perspective view and a partial cross-sectional view, respectively, of a bottom case of a secondary battery according to an embodiment of the present invention;
FIG. 5 is a perspective view of a bottom case of a secondary battery according to another embodiment of the present invention;
FIG. 6 is a perspective view of a bottom case of a secondary battery according to another embodiment of the present invention;
FIGS. 7A to 7D are partial cross-sectional views of bottom cases of a secondary battery including various types of trenches according to other embodiments not being part of of the present invention; and
FIGS. 8A and 8B illustrate states in which a battery cell of a secondary battery is being adhered to a bottom case using an adhesive, according to an embodiment of the present invention.

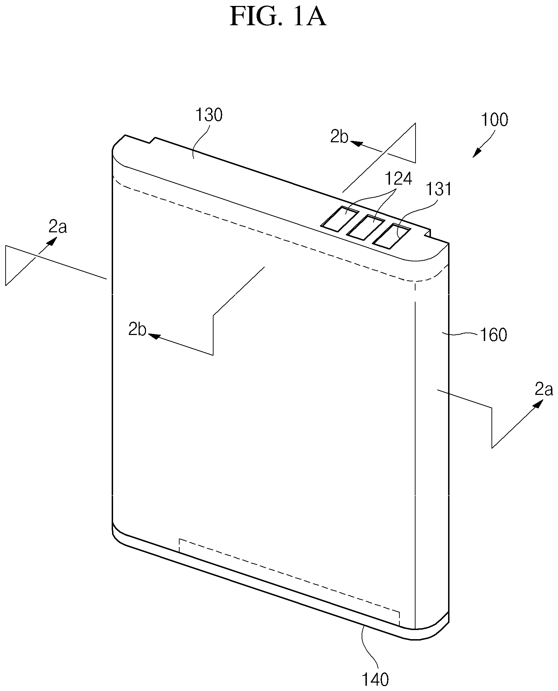

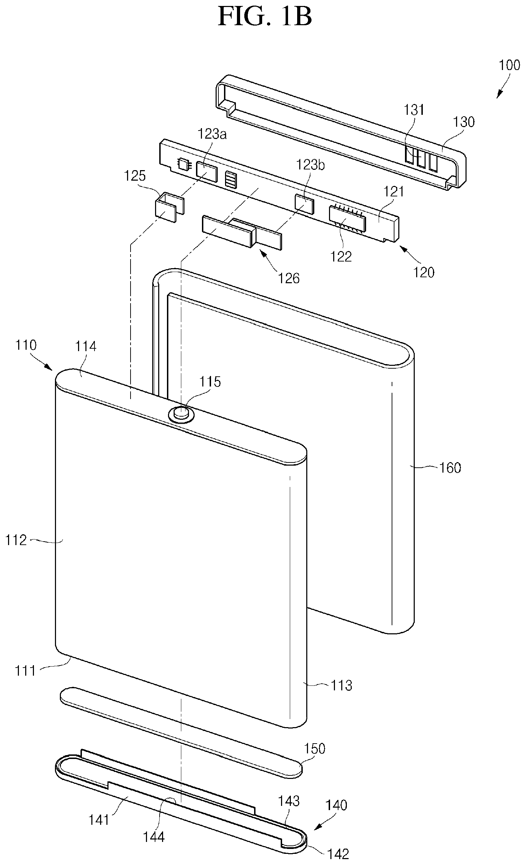

As shown in FIGS. 1A and 1B, the secondary battery 100 according to an embodiment of the present invention includes a battery cell 110, a protection circuit module 120, a top case 130, a bottom case 140, and a label 160.

In one embodiment, the battery cell has a bottom surface 111, a pair of long side regions, or walls, 112 upwardly extending from the bottom surface 111, a pair of short side regions, or walls, 113 connecting the pair of long side regions 112 in a curved shape, a cap plate 114 covering the pair of long side regions 112 and the pair of short side regions 113, and a terminal 115 formed in the cap plate 114. In one embodiment, the bottom surface 111, the pair of long side regions 112, and the pair of short side regions 113 are collectively referred to as a can or a case. The can may be formed of aluminum, an aluminum alloy, steel, nickel-plated steel, or any other suitable material. In one embodiment, the cap plate 114 may be welded to the can, such as via laser welding, and may be formed of aluminum, an aluminum alloy, steel, nickel-plated steel, or any other suitable material. The terminal 115, in one embodiment, is electrically insulated from the cap plate 114.

An electrode assembly (not shown) including a positive electrode plate, a separator, a negative electrode plate, and an organic electrolyte (not shown) are accommodated in the battery cell 110. The battery cell 110 may be a lithium ion battery or a lithium polymer battery. However, embodiments of the present invention are not limited thereto. Since a configuration of the battery cell 110 is well known in the art, a detailed description thereof will be omitted.
The protection circuit module 120 prevents or substantially prevents overcharge, overdischarge, or overcurrent of the battery cell 110. The protection circuit module 120, in one embodiment, includes a printed circuit board 121, a plurality of electronic protection devices 122 mounted on the printed circuit board 121, cell terminals 123a and 123b formed on a surface of the printed circuit board 121, and a pack terminal 124 formed on another surface of the printed circuit board 121. One cell terminal 123a may be electrically connected to the cap plate 114 of the battery cell 110 through a connection plate 125, and the other cell terminal 123b may be electrically connected to the terminal 115 of the battery cell 110 through a thermally-sensitive safety device 126. In one embodiment, the thermally-sensitive safety device 126 may be a positive temperature coefficient (PTC) device having resistance values increasing according to a temperature increase.

The top case 130 covers the protection circuit module 120, thereby protecting the protection circuit module 120 against external surroundings. That is, the top case 130 prevents or substantially prevents external foreign matter from penetrating into the protection circuit module 120 and may prevent or substantially prevent the protection circuit module 120 from being damaged due to a falling shock of the secondary battery 100. The top case 130 includes one or more openings 131 to allow the pack terminal 124 of the protection circuit module 120 to be exposed to the outside. The top case 130 may be preformed using a plastic resin to then be coupled to the protection circuit module 120. Alternatively, the top case 130 may be manufactured by mounting the battery cell 110 and the protection circuit module 120 in a mold to then be injection molded.

The bottom case 140 covers the bottom surface 111 of the battery cell 110, thereby protecting the battery cell 110 from being damaged due to a falling shock of the secondary battery 100. The bottom case 140 may be preformed using a plastic resin to then be coupled to the bottom surface 111 of the battery cell 110.

The bottom case 140, in one embodiment, has a pair of linear long sides 141 spaced apart from each other, and a pair of curved short sides 142 connecting opposite ends of the pair of linear long sides 141. The pair of linear long sides 141 of the bottom case 140 correspond to the pair of long side regions 112 of the battery cell 110, and the pair of curved short sides 142 of the bottom case 140 correspond to the pair of short side regions 113 of the battery cell 110. In one embodiment, regions (e.g., predetermined regions) of the bottom case 140 consisting of the pair of linear long sides 141 and the pair of curved short sides 142 may cover the bottom surface 111 of the battery cell 110.

The bottom case 140 covers the bottom surface 111 of the battery cell 110 and includes one or more trenches or grooves 143. For example, the one or more trenches 143 may run around the periphery of the inside surface of the bottom case 140 so that the trenches face the bottom surface of the battery cell.

In one embodiment, the bottom case 140 further includes close contact portions 144 extending towards the long side regions 112 of the battery cell 110 to closely contact the long side regions 112 of the battery cell 110.

In one embodiment, an adhesive 150 is disposed between the bottom case 140 and the bottom surface 111 of the battery cell 110, and the bottom case 140 and the battery cell 110 may not be separated from each other.

In one embodiment, the label 160 covers the battery cell 110, the top case 130, and the bottom case 140. In one embodiment, a top region of the top case 130 and a bottom region of the bottom case 140 are exposed to the outside through the label 160, and the label 160 covers the pair of long side regions 112 and the pair of short side regions 113 of the battery cell 110, thereby protecting the battery cell 110 against external surroundings and preventing or substantially preventing the battery cell 110 from being unnecessarily electrically short circuited.

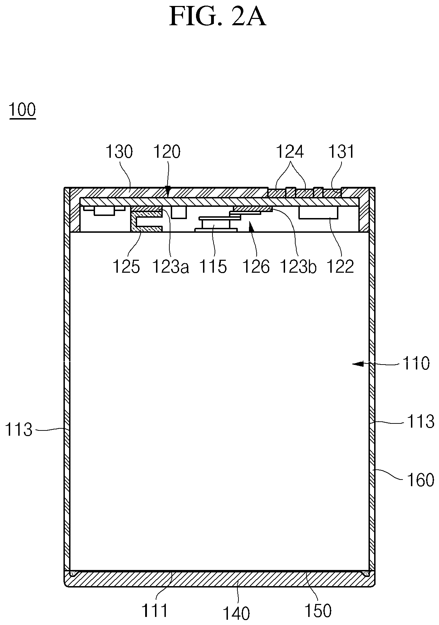

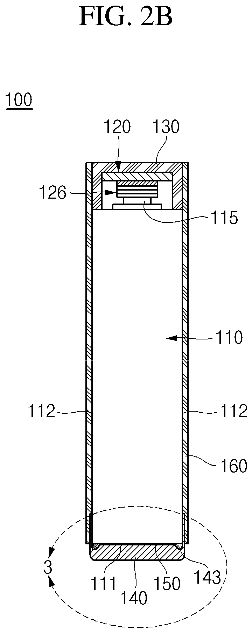

FIGS. 2A and 2B are partial cross-sectional views of the secondary battery of FIG. 1, taken along the lines 2a-2a and 2b-2b, respectively.

As shown in FIGS. 2A and 2B, in one embodiment, the protection circuit module 120 is electrically connected to the battery cell 110 on the battery cell 110 through the connection plate 125 and the thermally-sensitive safety device 126 and is covered by the top case 130. The pack terminal 124 of the protection circuit module 120 is exposed to the outside through the openings 131 formed in the top case 130.

The bottom case 140 is mechanically coupled to a lower portion of the battery cell 110, and the adhesive 150 is disposed between the battery cell 110 and the bottom case 140.

Since the trenches 143 are formed in the bottom case 140, the adhesive 150 is prevented or substantially prevented from being exposed to the outside when the battery cell 110 and the bottom case 140 are adhered to each other using the adhesive 150.

In one embodiment, since the battery cell 110, the close contact portions 144 of the bottom case 140, and the top case 130 are wrapped by the label 160, the top case 130 and the bottom case 140 may not be separated from the battery cell 110. The top region of the top case 130 is exposed to the outside through the label 160 and the bottom region of the bottom case 140 is exposed to the outside through the label 160.

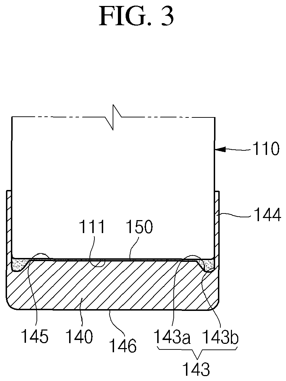

FIG. 3 is an enlarged view of a region "3" shown in FIG. 2B.

As shown in FIG. 3, the bottom case 140 has a generally planar first surface 145 closely contacting the bottom surface 111 of the battery cell 110, and a second surface 146 opposite to the first surface 145. In one embodiment, each of the trenches 143 has an inclined surface 143a inclined from the first surface 145 toward the second surface 146, and a curved surface 143b curved from the inclined surface 143a toward a periphery of the bottom case 140. In such a manner, the trenches 143 may be formed in a direction away from the periphery of the bottom surface 111 of the battery cell 110.

The adhesive 150 may be disposed between the bottom surface 111 of the battery cell 110 and the first surface 145 of the bottom case 140. However, during adhesion between the battery cell 110 and the bottom case 140, the adhesive 150 in a liquid phase may flow to the trenches 143 each having the inclined surface 143a and the curved surface 143b. Since the trenches 143 are formed to have a depth (e.g., a predetermined depth), the adhesive 150 may not flow to the outside of the trenches 143. That is, the adhesive 150 may not leak out from the secondary battery 100. In one embodiment, the adhesive 150 stays between the periphery of the bottom surface 111 of the battery cell 110 and the trenches 143 of the bottom case 140.

According to an embodiment of the present invention as described above, an undesirable outer appearance due to leakage of the adhesive 150 and failure due to impurity generation may be prevented or substantially prevented.

In an exemplary embodiment, the trenches 143 are formed to have a depth of approximately 5% to 50% of a thickness of the bottom case 140.

Here, the thickness of the bottom case 140 refers to the distance from the first surface 145 to the second surface 146. The bottom case 140 has a thickness great enough to prevent or substantially prevent the battery cell 110 from being damaged due to a falling shock of the secondary battery 100. Therefore, the bottom case 140 may have a thickness varying according to a size, shape, and weight of the battery cell 110.

Therefore, even if the trenches 143 have different depths according to the thickness of the bottom case 140, the depths of the trenches 143, in an exemplary embodiment, are approximately 5% to 50% of the thickness of the bottom case 140.

If each of the trenches 143 has a depth of less than approximately 5% of the thickness of the bottom case 140, the excessively shallow trenches 143 may cause the adhesive 150 to be leaked. If each of the trenches 143 has a depth of greater than approximately 50% of the thickness of the bottom case 140, too great an amount of the adhesive 150 may flow into the trenches 143, thereby lowering adhesion efficiency between the battery cell 110 and the bottom case 140.

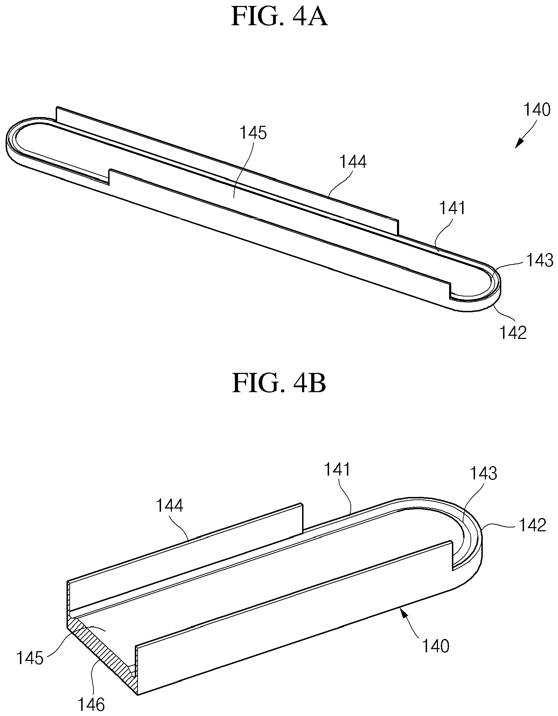

FIGS. 4A and 4B are a perspective view and a partial cross-sectional view, respectively, of a bottom case 140 of the secondary battery 100, according to an embodiment of the present invention.

As shown in FIGS. 4A and 4B, the bottom case 140 has the pair of linear long sides 141 spaced apart from each other and the pair of curved short sides 142 connecting the pair of linear long sides 141. The close contact portions 144 may be formed in the pair of linear long sides 141.

In one embodiment, the trenches 143 may be formed to be spaced apart from the pair of linear long sides 141 and may be formed to be parallel or substantially parallel to the pair of linear long sides 141. In addition, the trenches 143 may be formed to be spaced apart from the pair of curved short sides 142 and may be formed to be parallel or substantially parallel to the pair of curved short sides 142.

In one embodiment, the trenches 143 may be formed along inner regions of the pair of linear long sides 141 and may be formed to be parallel or substantially parallel to the pair of linear long sides 141. In addition, the trenches 143 may be formed along inner regions of the pair of curved short sides 142 and may be formed to be parallel or substantially parallel to the pair of curved short sides 142.

In one embodiment, the trenches 143 may be formed on the first surface 145 of the bottom case 140 in a substantially closed curve. Therefore, during adhesion between the battery cell 110 and the bottom case 140 using the adhesive 150, the adhesive 150 may not leak through any region of the bottom case 140.

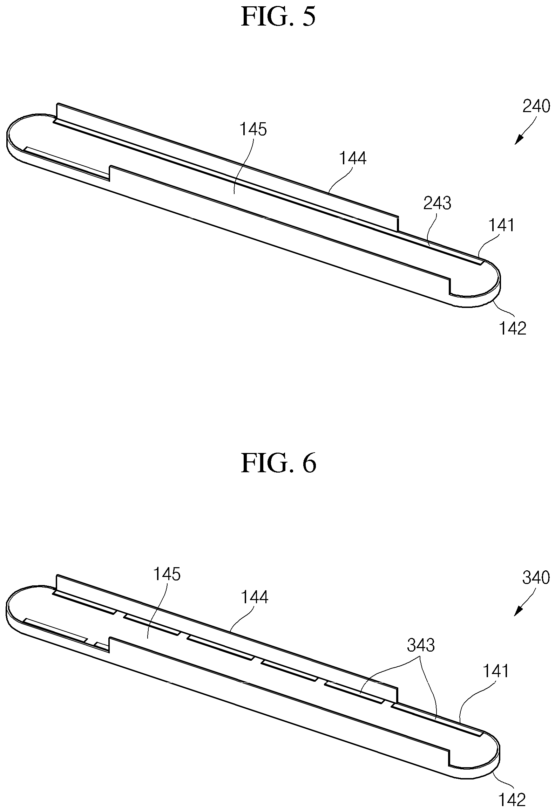

FIG. 5 is a perspective view of a bottom case 240 of a secondary battery according to another embodiment of the present invention.

As shown in FIG. 5, trenches 243 of the bottom case 240 may be formed to be spaced apart from the pair of linear long sides 141 or along inner regions of the pair of linear long sides 141. That is, the trenches 243, in one embodiment, are not formed in the pair of curved short sides 142. The trenches 243, in one embodiment, may be generally formed in solid line types, in other words as a continuous groove or trench, parallel or substantially parallel to the pair of linear long sides 141 of the bottom case 240.

In the bottom case 240, a reduction in strength may not occur in the pair of curved short sides 142. For example, if the secondary battery falls, the severest shock may be applied to corner regions of the secondary battery. Therefore, if the secondary battery falls, the corner regions of the secondary battery may be damaged. However, as described above, since the trenches 243 causing a reduction in mechanical strength are not formed in the pair of curved short sides 142 of the bottom case 240 corresponding to the corner regions of the secondary battery, the secondary battery may have an increased strength to withstand the falling shock.

In one embodiment, during adhesion between the battery cell 110 and the bottom case 240, an amount of the adhesive 150 may be somewhat accurately controlled so that even when the trenches 243 are formed only at the pair of linear long sides 141 of the bottom case 240, the adhesive 150 may not be exposed to the outside through the pair of curved short sides 142. That is, the trenches 243 formed only at the pair of linear long sides 141 of the bottom case 240 may hold all of the adhesive 150 therein so as not to leak out.

FIG. 6 is a perspective view of a bottom case 340 of a secondary battery according to another embodiment of the present invention.

In one embodiment, as shown in FIG. 6, trenches 343 are formed at the pair of linear long sides 141 of the bottom case 340. The trenches 343 may be generally formed in dash line types, in other words discontinuously. The trenches 343, in one embodiment, are not formed at the pair of curved short sides 142 of the bottom case 340, and are formed to be parallel to the pair of linear long sides 141 of the bottom case 340. As such, the bottom case 340 may not have a reduced mechanical strength of the pair of curved short sides 142 while minimizing or reducing a reduction in mechanical strength of the pair of linear long sides 141. Therefore, a secondary battery including the bottom case 340 may have an increased strength to withstand a falling shock.

In other embodiments, such as where an amount of the adhesive 150 is more accurately controlled during adhesion between the battery cell 110 and the bottom case 340, the trenches 343 may be formed not only in dash line types but in dot line types, dash-dot line types, or dash-dot-dot line types, or various other discontinuous arrangements.

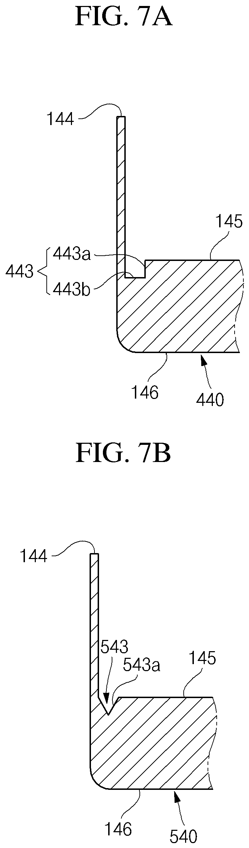

FIGS. 7A to 7D are partial cross-sectional views of bottom cases of a secondary battery including various types of trenches according to other embodiments not being part of the present invention.

According to another embodiment not being part of the present invention, as shown in FIG. 7A, a trench 443 of a bottom case 440 has a side surface 443a formed vertically or substantially vertically from the first surface 145 toward the second surface 146, and a bottom surface 443b connected to the side surface 443a and formed horizontally or substantially horizontally, or parallel, to the first surface 145 and the second surface 146. That is, the trench 443 has a substantially rectangular cross-sectional shape. As such, the trench 443 has a relatively large volume, thereby holding a relatively large amount of the adhesive 150.

According to another embodiment not being part of the present invention, as shown in FIG. 7B, a trench 543 of a bottom case 540 has an inclined surface 543a substantially inclined from the first surface 145 toward the second surface 146, such that the trench 543 has a substantially triangular cross-sectional shape. As such, the trench 543 has a relatively small volume, thereby alleviating the reduction in mechanical strength of the bottom case 540.

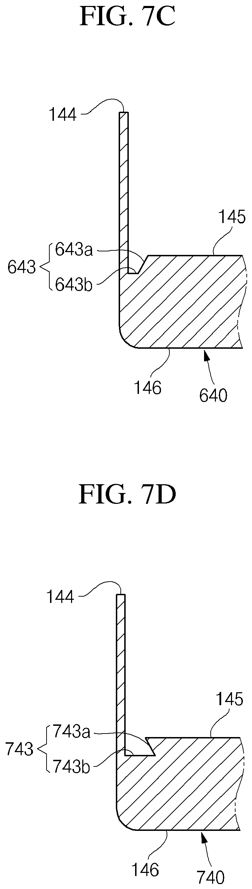

According to another embodiment not being part of the present invention, as shown in FIG. 7C, a trench 643 of a bottom case 640 has an inclined surface 643a substantially inclined from the first surface 145 toward the second surface 146, and a bottom surface 643b connected to the inclined surface 643a and formed horizontally or substantially horizontally, or parallel, to the first surface 145 and the second surface 146. In one embodiment, the trench 643 has a larger entrance width than a width of the bottom surface 643b. That is, the trench 643 has a substantially inversely trapezoidal cross-sectional shape. As such, the trench 643 is relatively easily taken out from a mold, thereby facilitating injection molding of the bottom case 640.

According to another embodiment not being part of the present invention, as shown in FIG. 7D, a trench 743 of a bottom case 740 has an inclined surface 743a substantially inclined from the first surface 145 toward the second surface 146, and a bottom surface 743b connected to the inclined surface 743a and formed horizontally or substantially horizontally, or parallel, to the first surface 145 and the second surface 146. In one embodiment, the trench 743 has a smaller entrance width than a width of the bottom surface 743b. That is, the trench 743 has a substantially trapezoidal cross-sectional shape. As such, a coupling force between the adhesive 150 filling the trench 743 and the bottom case 740 may be relatively increased. Therefore, separation of a battery cell and the bottom case 740 may be more effectively prevented or reduced.

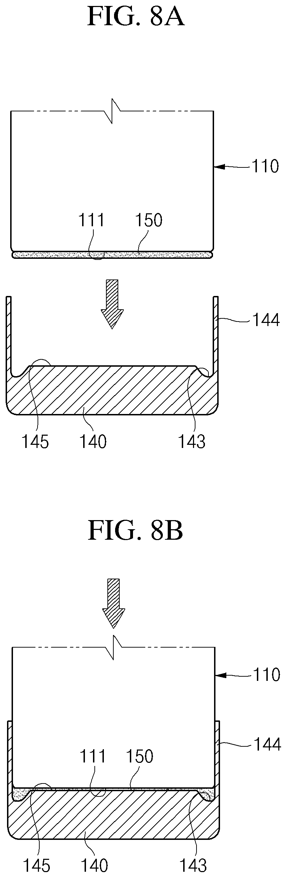

FIGS. 8A and 8B illustrate states in which the battery cell 110 of the secondary battery 100 is being adhered to the bottom case 140 using the adhesive 150, according to an embodiment of the present invention.

In one embodiment, as shown in FIG. 8A, a uniform or substantially uniform amount of the adhesive 150 is applied to the bottom surface 111 of the battery cell 110. Conversely, a uniform or substantially uniform amount of the adhesive 150 may be applied to the bottom case 140.

Next, as shown in FIG. 8B, the battery cell 110 and the bottom case 140 are coupled to each other. If the amount of the adhesive 150 is greater than a reference amount, the adhesive 150 may be disposed between the battery cell 110 and the first surface 145 of the bottom case 140. In addition, since the adhesive 150 may flow to the trenches 143 of the bottom case 140, it may be between the battery cell 110 and the trenches 143 of the bottom case 140. However, the trenches 143 hold the adhesive 150 and prevent or substantially prevent the adhesive 150 from leaking out from the battery cell 110 and the bottom case 140.

## Claims

1. A secondary battery (100) comprising:a battery cell (110);a protection circuit module (120) electrically connected to the battery cell (110);a top case (130) covering the protection circuit module (120); and a bottom case (140) covering a bottom surface (111) of the battery cell (110),wherein the bottom case (140) includes one or more trenches (143) formed in the inner surface of the bottom case (140) that faces the bottom surface (111) of the battery cell (110),wherein the bottom case (140) includes a planar first surface (145) closely contacting the bottom surface (111) of the battery cell (110) and a second surface (146) opposite to the first surface (145), **characterized in that** each of the one or more trenches (143) has an inclined surface (143a) inclined from the first surface (145) towards the second surface (146), and a curved surface (143b) curved from the inclined surface (143a) towards a periphery of the bottom case (140).

2. The secondary battery (100) of claim 1, wherein the one or more trenches (143) are formed at the periphery of the inner surface of the bottom case (140).

3. The secondary battery (100) of claim 1 or 2, further comprising an adhesive (150) between the bottom surface (111) of the battery cell (110) and the bottom case (140), at least a portion of the adhesive (150) being received in the one or more trenches (143).

4. The secondary battery (100) of any one of the preceding claims, wherein the bottom case (140) has a pair of linear long sides (141) spaced apart from each other and a pair of curved short sides (142) connecting opposite ends of the linear long sides (141), and the one or more trenches (143) are spaced apart from the pair of linear long sides (141), respectively.

5. The secondary battery (100) of claim 4, wherein the one or more trenches (143) are substantially parallel to the pair of linear long sides (141), respectively.

6. The secondary battery (100) of claim 4 or 5, wherein the one or more trenches (143) are spaced apart from the pair of curved short sides (142), respectively.

7. The secondary battery (100) of claim 6, wherein the one or more trenches (143) are substantially parallel to the pair of curved short sides (142), respectively.

8. The secondary battery (100) of any one of claims 1 to 3, wherein the bottom case (140) has a pair of linear long sides (141) spaced apart from each other and a pair of curved short sides (142) connecting opposite ends of the linear long sides (141), and the one or more trenches (143) are formed along inner peripheries of the pair of linear long sides (141), respectively.

9. The secondary battery (100) of claim 8, wherein the one or more trenches (143) are formed along inner peripheries of the pair of curved short sides (142), respectively.

10. The secondary battery (100) of any one of the preceding claims, wherein the one or more trenches (143) are formed as continuous trenches (143), or the one or more trenches (143) are formed as discontinuous trenches (143).

11. The secondary battery (100) of any one of the preceding claims, wherein the one or more trenches (143) have a depth of 5 % to 50% of the thickness of the bottom case (140).

12. The secondary battery (100) of any one of the preceding claims, wherein the battery cell (110) includes a pair of long side walls, and the bottom case (140) further includes close contact portions extending to the long side walls of the battery cell (110) and closely contacting the long side walls.

13. The secondary battery of any one of the preceding claims, further comprising a label (160) wrapping the battery cell (110), the top case (130), and the bottom case (140).

## Patentansprüche

1. Sekundärbatterie (100), umfassend: eine Batteriezelle (110); ein Schutzschaltungsmodul (120), das mit der Batteriezelle (110) elektrisch verbunden ist; ein oberes Gehäuse (130), welches das Schutzschaltungsmodul (120) bedeckt; und ein unteres Gehäuse (140), das eine untere Fläche (111) der Batteriezelle (110) bedeckt, wobei das untere Gehäuse (140) eine oder mehrere Rinnen (143) einschließt, die in der inneren Fläche des unteren Gehäuses (140), die der unteren Fläche (111) der Batteriezelle (110) zugewandt ist, ausgebildet sind, wobei das untere Gehäuse (140) eine ebene erste Fläche (145), die mit der unteren Fläche (111) der Batteriezelle (110) in engem Kontakt steht, und eine der ersten Fläche (145) entgegengesetzte zweite Fläche (146) einschließt, **dadurch gekennzeichnet, dass** jede der einen oder mehreren Rinnen (143) eine geneigte Fläche (143a), die von der erste Fläche (145) zur zweiten Fläche (146) geneigt ist, und eine gekrümmte Fläche (143b), die von der geneigten Fläche (143a) zu einem Rand des unteren Gehäuses (140) gekrümmt ist, aufweist.

2. Sekundärbatterie (100) nach Anspruch 1, wobei die eine oder mehreren Rinnen (143) am Rand der inneren Fläche des unteren Gehäuses (140) ausgebildet sind.

3. Sekundärbatterie (100) nach Anspruch 1 oder 2, ferner umfassend ein Haftmittel (150) zwischen der unteren Fläche (111) der Batteriezelle (110) und dem unteren Gehäuse (140), wobei zumindest ein Teil des Haftmittels (150) in einer der einen oder mehreren Rinnen (143) aufgenommen ist.

4. Sekundärbatterie (100) nach einem der vorangehenden Ansprüche, wobei das untere Gehäuse (140) ein Paar voneinander beabstandeter linearer langer Seiten (141) und ein Paar gekrümmter kurzer Seiten (142), die entgegengesetzte Enden der linearen langen Seiten (141) verbinden, aufweist und die eine oder mehreren Rinnen (143) jeweils vom Paar linearer langer Seiten (141) beabstandet sind.

5. Sekundärbatterie (100) nach Anspruch 4, wobei die eine oder mehreren Rinnen (143) jeweils im Wesentlichen parallel zum Paar linearer langer Seiten (141) sind.

6. Sekundärbatterie (100) nach Anspruch 4 oder 5, wobei die eine oder mehreren Rinnen (143) jeweils vom Paar gekrümmter kurzer Seiten (142) beabstandet sind.

7. Sekundärbatterie (100) nach Anspruch 6, wobei die eine oder mehreren Rinnen (143) jeweils im Wesentlichen parallel zum Paar gekrümmter kurzer Seiten (142) sind.

8. Sekundärbatterie (100) nach einem der Ansprüche 1 bis 3, wobei das untere Gehäuse (140) ein Paar voneinander beabstandeter linearer langer Seiten (141) und ein Paar gekrümmter kurzer Seiten (142), die entgegengesetzte Enden der linearen langen Seiten (141) verbinden, aufweist und die eine oder mehreren Rinnen (143) jeweils entlang innerer Ränder des Paars linearer langer Seiten (141) ausgebildet sind.

9. Sekundärbatterie (100) nach Anspruch 8, wobei die eine oder mehreren Rinnen (143) jeweils entlang innerer Ränder des Paars gekrümmter kurzer Seiten (142) ausgebildet sind.

10. Sekundärbatterie (100) nach einem der vorangehenden Ansprüche, wobei die eine oder mehreren Rinnen (143) als kontinuierliche Rinnen (143) ausgebildet sind oder die eine oder mehreren Rinnen (143) als diskontinuierliche Rinnen (143) ausgebildet sind.

11. Sekundärbatterie (100) nach einem der vorangehenden Ansprüche, wobei die eine oder mehreren Rinnen (143) eine Tiefe von 5 % bis 50 % der Dicke des unteren Gehäuses (140) aufweisen.

12. Sekundärbatterie (100) nach einem der vorangehenden Ansprüche, wobei die Batteriezelle (110) ein Paar langer Seitenwände einschließt und das untere Gehäuse (140) ferner Engkontaktabschnitte einschließt, die sich zu den langen Seitenwänden der Batteriezelle (110) erstrecken und mit den langen Seitenwänden in engem Kontakt stehen.

13. Sekundärbatterie nach einem der vorangehenden Ansprüche, ferner umfassend ein Etikett (160), das die Batteriezelle (110), das obere Gehäuse (130) und das untere Gehäuse (140) umhüllt.

## Revendications

1. Batterie secondaire (100) comprenant : un élément de batterie (110) ; un module de circuit de protection (120) relié électriquement à l'élément de batterie (110) ; un boîtier supérieur (130) recouvrant le module de circuit de protection (120) ; et un boîtier inférieur (140) recouvrant une surface inférieure (111) de l'élément de batterie (110), où le boîtier inférieur (140) comporte une ou plusieurs tranchée(s) (143) formée(s) dans la surface intérieure du boîtier inférieur (140) qui fait face à la surface inférieure (111) de l'élément de batterie (110), où le boîtier inférieur (140) comporte une première surface plane (145) en contact étroit avec la surface inférieure (111) de l'élément de batterie (110) et une deuxième surface (146) opposée à la première surface (145), **caractérisée en ce que** chacune de la ou des plusieurs tranchée(s) (143) a une surface inclinée (143a) inclinée par rapport à la première surface (145) vers la deuxième surface (146), et une surface incurvée (143b) incurvée à partir de la surface inclinée (143a) vers une périphérie du boîtier inférieur (140).

2. Batterie secondaire (100) de la revendication 1, dans laquelle la ou les plusieurs tranchée(s) (143) est/sont formée(s) au niveau de la périphérie de la surface intérieure du boîtier inférieur (140).

3. Batterie secondaire (100) de la revendication 1 ou 2, comprenant en outre un adhésif (150) entre la surface inférieure (111) de l'élément de batterie (110) et le boîtier inférieur (140), au moins une partie de l'adhésif (150) étant reçue dans la ou les plusieurs tranchée(s) (143) .

4. Batterie secondaire (100) de l'une quelconque des revendications précédentes, dans laquelle le boîtier inférieur (140) a une paire de côtés longs linéaires (141) espacés l'un de l'autre et une paire de côtés courts incurvés (142) reliant des extrémités opposées des côtés longs linéaires (141), et la ou les plusieurs tranchée (s) (143) est/sont espacée(s) de la paire de côtés longs linéaires (141), respectivement.

5. Batterie secondaire (100) de la revendication 4, dans laquelle la ou les plusieurs tranchée(s) (143) est/sont essentiellement parallèle(s) à la paire de côtés longs linéaires (141), respectivement.

6. Batterie secondaire (100) de la revendication 4 ou 5, dans laquelle la ou les plusieurs tranchée (s) (143) est/sont espacée(s) de la paire de côtés courts incurvés (142), respectivement.

7. Batterie secondaire (100) de la revendication 6, dans laquelle la ou les plusieurs tranchée(s) (143) est/sont essentiellement parallèle(s) à la paire de côtés courts incurvés (142), respectivement.

8. Batterie secondaire (100) de l'une quelconque des revendications 1 à 3, dans laquelle le boîtier inférieur (140) a une paire de côtés longs linéaires (141) espacés l'un de l'autre et une paire de côtés courts incurvés (142) reliant des extrémités opposées des côtés longs linéaires (141), et la ou les plusieurs tranchée(s) (143) est/sont formée(s) le long de périphéries intérieures de la paire de côtés longs linéaires (141), respectivement.

9. Batterie secondaire (100) de la revendication 8, dans laquelle la ou les plusieurs tranchée(s) (143) est/sont formée(s) le long de périphéries intérieures de la paire de côtés courts incurvés (142), respectivement.

10. Batterie secondaire (100) de l'une quelconque des revendications précédentes, dans laquelle la ou les plusieurs tranchée(s) (143) est/sont formée(s) en tant que tranchées continues (143), ou la ou les plusieurs tranchée(s) (143) est/sont formée(s) en tant que tranchées discontinues (143).

11. Batterie secondaire (100) de l'une quelconque des revendications précédentes, dans laquelle la ou les plusieurs tranchée(s) (143) a/ont une profondeur de 5 % à 50 % de l'épaisseur du boîtier inférieur (140).

12. Batterie secondaire (100) de l'une quelconque des revendications précédentes, dans laquelle l'élément de batterie (110) comporte une paire de parois latérales longues, et le boîtier inférieur (140) comporte en outre des parties de contact étroit s'étendant vers les parois latérales longues de l'élément de batterie (110) et venant en contact étroit avec les parois latérales longues.

13. Batterie secondaire de l'une quelconque des revendications précédentes, comprenant en outre une étiquette (160) enveloppant l'élément de batterie (110), le boîtier supérieur (130), et le boîtier inférieur (140).
